# EUROPEAN PATENT APPLICATION

(11) **EP 1 983 248 A1**
(43) Date of publication of application: **22.10.2008**
(21) Application number: 08251477.9
(22) Date of filing: 21.04.2008
(51) Int. Cl.: F16L 45/00, E03F 5/02, E03F 5/042

(54) **Pipe sealing device**

(30) Priority: 21.04.2007 GB 0707759
(71) Applicant: SEVERN TRENT WATER LIMITED, Birmingham, B26 3PU (GB)
(72) Inventor: Wilson, Ian, Worksop Nottinghamshie S81 0PX (GB)
(74) Representative: Makovski, Priscilla Mary

(57) **Abstract**

A sealing device (10) is designed to provide a removable seal for an opening (5) in a pipe (4) such as an inspection opening in a sewer pipe. The device (10) comprises a latching member (11) adapted for engagement with a surface (17) of the pipe adjacent the opening, a sealing member (12) for sealing the opening on an opposing surface (18) of the pipe, a support member (13) for the sealing member (12) and an adjustment means (14) for adjusting the spacing between the latching member (11) and the support member (13). This adjustment means that the sealing member (12) is urged against the surface of the pipe to seal the opening, but also that the device is readily removable.

## Description

This invention relates to a sealing device for a pipe opening, and in particular to an inspection opening in a sewer pipe.

Sewer pipes carry either foul water (effluent) or surface water. In most systems one of each type is provided, with the pipes separated but running in parallel, and with each having its own inspection chamber or manhole. The different pipes are separated so that effluent cannot overflow from the foul water pipe into the surface water pipe and cause pollution. The surface water pipe can be viewed as a convenient way of dealing with such an overflow, and in the past it has been known for adjacent inspection chambers for the two pipes to have an opening made for that purpose. Nowadays environmental regulations mean that this is not acceptable.

Furthermore, some years ago it was a common practice for the foul water and surface water pipes, although separate, to have a common inspection chamber or manhole. This arrangement is usually known as a dual manhole system. The foul water pipe is commonly open in the inspection chamber, while the surface water pipe runs through the chamber at a higher level, and has an inspection opening closed by a loose-fitting cover. A dual manhole system has the disadvantage that any rise in effluent level in the foul water pipe, caused for example by a blockage downstream, can displace the cover and allow effluent to overflow into the surface water pipe. The resulting pollution is one for which the water utility will be responsible. One solution to this overflow problem is to concrete over the inspection opening. This clearly avoids any overflow into and pollution in the surface water pipe, but is expensive, as it is time-consuming and labour-intensive. It also has the disadvantage that it is not possible to inspect the inside of the surface water pipe without breaking out the concrete, which is also expensive in time and labour.

According to a first aspect of the present invention we provide a sealing device for an opening in a pipe, the device providing a removable seal for the opening and comprising a latching member adapted for engagement with a surface of the pipe adjacent the opening, a sealing member for sealing the opening on an opposing surface of the pipe, a support member for the sealing member, and adjustment means for adjusting the spacing between the latching member and the support member, whereby the sealing member is urged to seal the opening.

The device seals the opening but is removable so that, where it is used in a dual manhole system, it prevents overflow but still readily allows inspection. It is also relatively inexpensive to make, and is easy to install, thus saving time and labour costs.

Conveniently the latching member is inserted into the pipe, for engagement with the internal surface of the pipe, and the sealing member seals against the external surface of the pipe. The opposite arrangement is also possible, however.

The latching member may be a bar, arranged so that it engages the pipe at opposing points of the opening. This allows the latching member to be inserted into the opening easily, while ensuring that it engages securely, so that it will not be dislodged by liquid pressure in the pipe. In a surface water sewer pipe, for example, the liquid pressure will not normally be greater than 10 bar. The latching member may have any convenient configuration to suit the shape of the opening. Conveniently, the latching member is of metal, for example stainless steel.

Preferably the sealing member is slightly larger than the opening, to provide a good seal. The sealing member is conveniently made in one piece of a suitable sealing material, such as closed-cell rubber foam. Such a material can readily be cut to shape to suit any particular opening.

The support member is rigid, and may be the same size and shape as the sealing member, to ensure that the sealing member engages fully round the opening. The support member is preferably attached to the sealing member by any convenient method, such as adhesive. The support member may be of any suitable rigid plastics material, such as polycarbonate or polypropylene. The thickness of the support member is chosen such that it provides the necessary support for the sealing member, but can readily be cut to shape with the sealing member if required.

The adjustment means preferably comprises a screw-threaded nut and bolt. The latching member, sealing member and support member are each provided with an aperture by which they are mounted on the bolt. The latching member conveniently engages the head of the bolt, while the nut acts on the support member, to adjust the spacing between the latching member and the support member. The nut may act on the support member through a spreader member. The nut and bolt are preferably also of metal, such as stainless steel.

In order to fit the device into an opening in a pipe, the sealing member and support member are chosen to fit the opening, or are cut to size if necessary. The latching member is mounted on the bolt, and inserted in the opening, to engage with the internal surface of the pipe. The sealing member and support member are mounted on the bolt, and the nut screwed onto the bolt until the sealing member is in full sealing engagement round the opening. The sealing member will then also be in sealing engagement with the bolt, to ensure that there is no leakage round the bolt. In order to remove the device, the nut is loosened, the sealing and support member pulled up the bolt, and the latching member disengaged.

It will be appreciated that the components of the sealing device can be kept as a kit, to be made up as necessary. Accordingly, a second aspect of the invention relates to such a kit.

According to a second aspect of the present invention, we provide a kit of parts for a sealing device for a opening in a pipe, the kit comprising a latching member, a sealing member and a support member, together with a bolt and nut, the latching member, sealing member and support member all being adapted to be mounted on the bolt, with the nut adapted to act on the support member to adjust the spacing between the latching member and the support member.

The kit may also include a spreader member through which the nut acts on the support member.

An embodiment of the sealing device of the invention is illustrated by way of example in the accompanying drawings, in which:
**Figure 1** is a sectional view through an inspection chamber of a dual manhole system;
**Figure 2** is a longitudinal section through a sealing device;
**Figure 3** is a plan view of the device of Figure 2; and
**Figure 4** is an underneath view of the device of Figure 2.

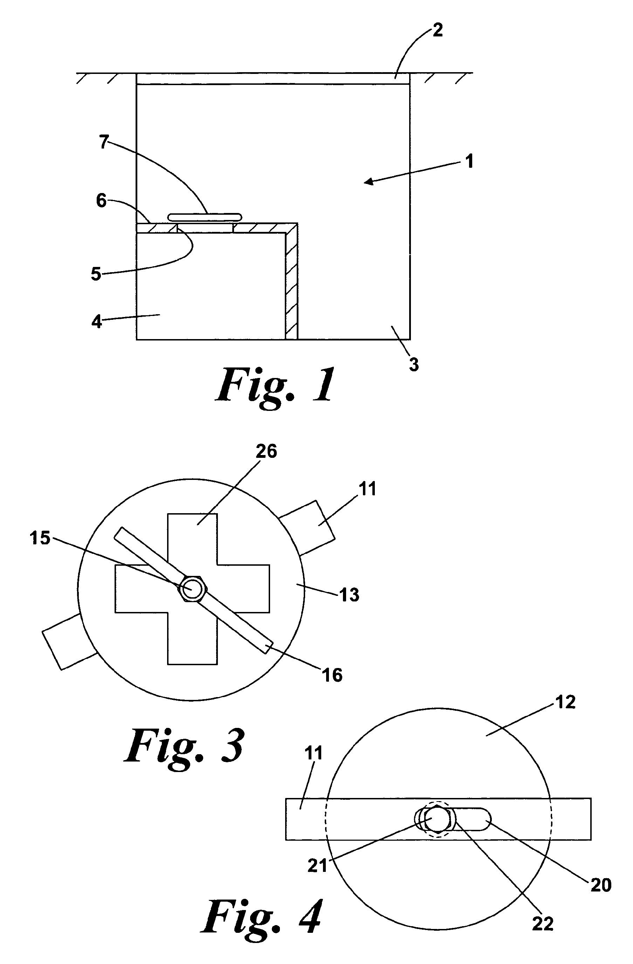

Figure 1 shows a sectional view though an inspection chamber 1 of a typical dual manhole sewer system. The inspection chamber 1 is closed at the top by a removable manhole cover 2. Through the inspection chamber 1 run a foul water pipe 3 and a surface water pipe 4. The foul water pipe 3 is open to the inspection chamber 1, while the surface water pipe 4 is housed within the foul water pipe 3, and has an inspection opening 5 on its top surface 6, closed by a loose cover 7. If the liquid in the foul water pipe 3 rises above the top surface 6 of the surface water pipe 4, it will displace the cover 7 and overflow into the surface water pipe 4.

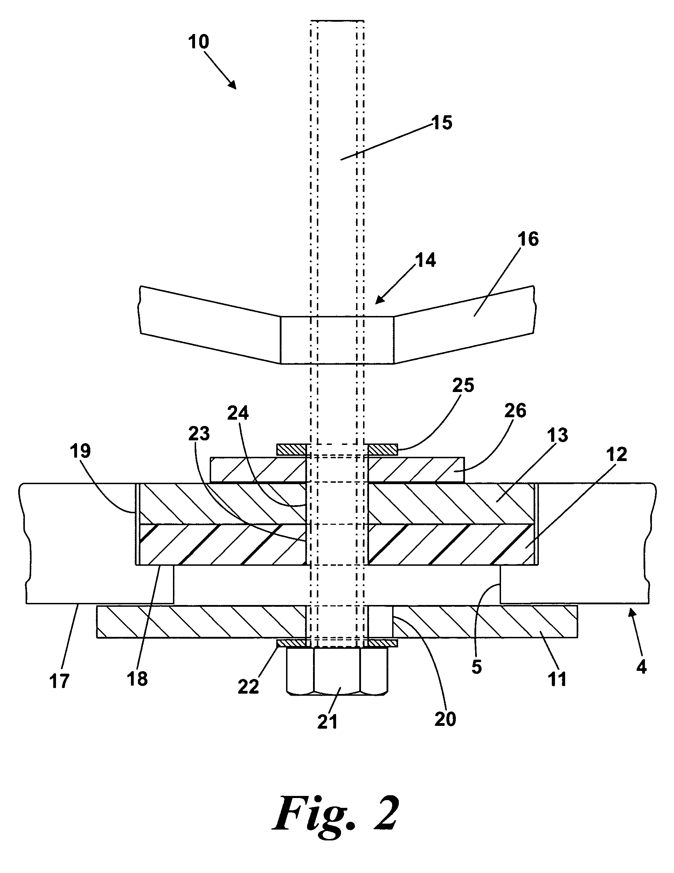

Figures 2 to 4 show a sealing device 10 for removably sealing the inspection opening 5. The device 10 is adapted for a circular opening, but it will be appreciated that it may be adapted for any shape of opening.

The sealing device 10 comprises a latching member 11, a sealing member 12 and a support member 13, all mounted on an adjustment means 14 comprising a screw-threaded bolt 15 and complementary nut 16, by which the spacing between the latching member 11 and the support member 13 can be adjusted to engage the sealing member 12 with the opening 5.

As shown in Figure 2, the latching member 11 engages the internal surface 17 of the pipe 4, while the sealing member 12 engages the external surface 18. Figure 2 shows the sealing member 12 located in a recess 19 in the external surface 18, but if, as in Figure 1, there is no recess in the external surface 18, the sealing member 12 will simply engage the surface round the opening 5.

The latching member 11 comprises a stainless steel bar, whose length is chosen to be greater than the diameter of the opening 5, so that it engages the internal surface 17 at two opposing points. It will be appreciated that its length will not be so great that it is difficult to insert in the opening 5.

As best seen in Figure 4, the bar 11 has a central elongate slot 20, to allow it to be mounted on the bolt 15 and to allow for some lateral tolerance in its position. The bar 11 engages the head 21 of the bolt 15 through a washer 22, also of stainless steel.

The sealing member 12 comprises a disc sized to fit the recess 19 of the opening 5. If there is no recess, the disc is arranged to be slightly larger than the opening 5, to ensure that it will seal properly. The disc is of a closed cell rubber foam material, approximately 2 - 3 cm thick. The material is chosen to be resistant to chemicals, and may be a natural or synthetic rubber material. Typically, the disc will be between 10 cm and 60 cm in diameter. For a rectangular opening, the sides of the sealing member 11 will normally be less than 60 cm long. The disc has a circular central aperture 23 to allow it to be mounted on the bolt 15.

The support member 13 is constructed to be the same shape as the sealing member 12, and is bonded to it by adhesive or connected in any other suitable way. The support member 13 is of a lightweight but rigid plastics material, and is formed from sheet of approximately the same thickness as the sealing member 12. The support member is also of chemical-resistant material, such as polycarbonate or polypropylene. Like the sealing member 12, the support member 13 has a circular central aperture 24 to allow it to be mounted on the bolt 15.

The sealing member 12 and the support member 13 can be cut to fit the opening 5 using standard power tools.

The support member 13 is acted on by the nut 16 through a washer 25 and a spreader plate 26. Each is of stainless steel. As best seen in Figure 3, the spreader plate 26 is cross-shaped, but could be of any suitable shape to ensure that the force applied to the support member 13 by the nut 16 is spread over the surface of the support member 13, in turn to ensure that the force is applied evenly to the sealing member 12 to provide a reliable seal for the opening 5. It will be appreciated that the shape of the spreader plate 26 may depend on the shape of the sealing member 12. For example, with a rectangular sealing member 12 it may be necessary to ensure that force is applied to the corners.

The bolt 15 is of stainless steel, and of diameter between 16 and 20 mm. The nut 16 is also of stainless steel, and as shown is a wing nut, for ease of use.

The sealing device 10 may be assembled from a kit of components, with each being chosen appropriately. It is envisaged that a range of latching member, spreader plates and assemblies of sealing and support member are provided, together with standard bolts, nuts and washers. Then, once the appropriate parts have been chosen, and the sealing member 12 and support member 13 cut to shape for the particular opening 5, the device 10 is assembled, with the latching member 11 and washer 22 being mounted on the bolt 15 to engage the head 21, and the remaining components mounted at the opposing end of the bolt 15. The device 10 is installed by inserting the latching member 11 in the opening 5 and engaging it with the internal surface 17 of the pipe. The sealing member 12, support member 13, spreader plate 26 and washer 25 are then slid down the bolt 15 until the sealing member 12 engages the opening 5. This is the position shown in Figure 2. The nut 16 is then screwed down to engage the washer 25 and to apply the sealing force to the sealing member 12 via the spreader plate 26 and the support member 13. The sealing member 12 will be compressed, so that it spreads to seal round the bolt 15 as well as round the opening 5.

Once in place, the device 10 provides a reliable seal for the opening 5, preventing overflow from the foul water pipe 3. The latching member 11 ensures that the seal is maintained under normal liquid pressures in the pipe 4, which may be up to 10 bar.

If the pipe 4 needs to be inspected the device 10 can readily be removed by reversing the installation steps described above. It can just as readily be replaced following the inspection.

The device 10, being made of chemical- resistant and corrosion-resistant materials, will last a long time.

The device 10 is easy and relatively simple to manufacture, and is easy to install and remove, so is inexpensive to make and to use. It may be used for any opening in a sewer system that needs to be closed, such as the example indicated above, where openings have been made between two inspection chambers. It can be viewed as an emergency tool to close such openings to prevent pollution.

It also has the advantage that it can be supplied as a kit of parts, which can readily from part of the items carried by a water utility engineer for maintenance purposes.

## Claims

1. A sealing device (10) for an opening (5) in a pipe (4) providing a removable seal for the opening (5), **characterised in that** the device comprises a latching member (11) adapted for engagement with a surface (17) of the pipe adjacent the opening, a sealing member (12) for sealing the opening on an opposing surface (18) of the pipe, a support member (13) for the sealing member (12) and adjustment means (14) for adjusting the spacing between the latching member (11) and the support member (13), whereby the sealing member (12) is urged to seal the opening (5).

2. A sealing device according to claim 1, in which the latching member (11) is inserted into the pipe (4) for engagement with the internal surface (17) of the pipe, and the sealing member (12) seals against the external surface (18) of the pipe.

3. A sealing device according to claim 1 or claim 2, in which the latching member (11) is a bar.

4. A sealing device according to any preceding claim, in which the sealing member is made in one piece of a sealing material which can be cut to shape.

5. A sealing device according to any preceding claim, in which the support member (13) is rigid, and of the same size and shape as the sealing member (12).

6. A sealing device according to any preceding claim, in which the support member (13) is attached to the sealing member (12).

7. A sealing device according to any preceding claim, in which the adjustment means (14) comprises a screw-threaded bolt (15) and nut (16).

8. A sealing device according to claim 7, in which the latching member (11), sealing member (12) and support member (13) are each provided with an aperture by which they are mounted on the bolt (15).

9. A sealing device according to claim 8, in which the latching member (11) engages the head (21) of the bolt (15) and the nut (16) acts on the support member (13).

10. A sealing device according to claim 9, in which the nut (16) acts on the support member (13) through a spreader member (26).

11. A sealing device according to any preceding claim, in which the latching member (11) and the adjustment means (14) are of a metal, preferably stainless steel.

12. A sealing device according to any preceding claim, in which the sealing member (12) and the support member (13) are of plastics materials.

13. A kit of parts for a sealing device (10) for an opening (5) in a pipe (4), **characterised in that** the kit comprises a latching member (11), a sealing member (12) and a support member (13), together with a bolt (15) and nut (16), the latching member, sealing member and support member all being adapted to be mounted on the bolt (15), with the nut (16) adapted to act on the support member (13) to adjust the spacing between the latching member (11) and the support member (13).

14. A kit of parts according to claim 13, in which a spreader member (26) is included, the nut (16) acting on the support member (13) through the spreader member.
